# EUROPEAN PATENT SPECIFICATION

(11) **EP 0 553 844 B1**
(45) Date of publication and mention of the grant of the patent: **21.10.1998**
(21) Application number: 93101395.7
(22) Date of filing: 29.01.1993
(51) Int. Cl.: G11B 15/28, G11B 15/675, G11B 25/06

(54) **Minicartridge tape drive**
Miniband-Kassettenspieler
Lecteur de mini-cartouches à bande

(30) Priority: 31.01.1992 US 830171
(43) Date of publication of application: 04.08.1993
(73) Proprietor: Seagate Technology, Inc., Scotts Valley, CA 95067-0360 (US); MATSUSHITA ELECTRIC INDUSTRIAL CO., LTD., Kadoma-shi, Osaka-fu, 571 (JP)
(72) Inventor: Miller, William R., California 92715 (US); Tsubouchi, Toshiharu, Onsen-gun Ehime 791-03 (JP); Saiki, Nariaki, Onsen-gun Ehime 791-03 (JP)
(74) Representative: Molyneaux, Martyn William

(56) References cited:
- EP-A- 241 238
- EP-A- 488 760
- US-A- 4 216 508
- US-A- 4 303 955
- US-A- 4 656 541

## Description

### BACKGROUND OF THE INVENTION

The present invention relates to a tape frive, for a minicartridge.

Most personal computer systems have Winchester disk drives that provide both substantial storage capacity and rapid data access. Recently Winchester disk drives have been sold in large quantities which meet the industry standard (ANSI) three and one-half inch form factor. This form factor promotes industry-wide compatibility of components. It requires that drives fit within a rectangular space having a height of approximately 1.75 inches (4.45 cm), a width of approximately 4.0 inches (10.16 cm) and a length of approximately 5.75 inches (14.61 cm). Many personal computer systems have thus been designed and sold having receptacles into which Winchester disk drives and minifloppy disk drives meeting the three and one-half inch form factor can be installed.

Currently three and one-half inch form factor Winchester disk drives have storage capacities of forty megabytes and more. It is prudent to back up the data on a Winchester disk drive at regular intervals so that it will not be lost in the event of a head crash. Also, in some instances, it is desirable to download the data from a Winchester disk drive onto a removable media for permanent storage in a library or for interchange with another computer system with which there is no electronic data link. Minifloppy diskettes have a relatively low storage capacity. Therefore it is both tedious and time consuming to back up the data on a three and one-half inch form factor Winchester disk drive utilizing a three and one-half inch form factor minifloppy disk drive. Because a significant number of minifloppy diskettes would be required, it is inconvenient to use such diskettes to exchange large data bases with other computer systems. Accordingly, streaming cartridge tape drives have been developed and are widely used for tape backup and interchange functions.

Currently, there is a so-called "minicartridge" which is widely used in three and one-half inch form factor tape drives for data storage. See for example, U.S. Patent No. 4,647,994 of Irwin Magnetic Systems, Inc. This minicartridge is manufactured by, or under license from, Minnesota Mining & Manufacturing Company (3M), and is commercially identified as the DC1000, DC2000, etc. Details of this tape cartridge are disclosed in U.S. Patent No. 3,692,255 assigned to 3M. This minicartridge includes a narrow tape which is approximately one-quarter of an inch wide. The minicartridge has a flat, rectangular configuration measuring approximately nine-sixteenths of an inch in height by approximately two and three-eighths inches in width by approximately three and three-sixteenths inches in length. The minicartridge includes a metal base plate and a plastic top cover. The metal base plate inhibits warpage and allows precision alignment. The magnetic tape is wound between two reels rotatably mounted between the base plate and the plastic top cover of the cartridge. This winding is accomplished utilizing a belt capstan roller which may be engaged by a capstan drive roller of the tape drive. The belt capstan roller drives a belt which engages the tape pack on each of the tape reels. The minicartridge further has a hinged tape access door which must be opened upon insertion into the drive in order to expose the tape for engagement by a read/write head.

With the advent of laptop computers, it is now desirable to provide a minicartridge tape drive which will fit within the three and one-half inch factor while having a height dimension on the order of about 1.0 inch (2.54 cm) or less. It is further desirable that the minicartridge be substantially contained within the form factor upon operative insertion into the tape drive. In order to accomplish this, the mechanical components of such a minicartridge tape drive must be extremely compact.

One component which is critical to the satisfactory performance of a minicartridge tape drive fitting within a reduced height three and one-half inch form factor is the cartridge loading mechanism. This mechanism properly positions and locks the cartridge in a stationary position within the tape drive so that a magnetic read/write head within the tape drive can engage the tape. Typically, the loading apparatus also includes an eject button, which is manually actuated to cause the tape cartridge to unload from the tape drive. For the user's convenience, it is desirable that the cartridge ejector mechanism have a bi-stable feel, i.e., it will be free in the loading slot and is ejected if not properly loaded, or is loaded properly into the drive as indicated by an audible click with tactile feedback caused by the fixed registration of the minicartridge.

Heretofore, it has been conventional to mount the capstan drive roller on a pivoting assembly for yielding engagement with the belt capstan roller of the minicartridge upon insertion into the drive. The capstan drive motor has normally been rigidly mounted in a rear portion of the frame of the drive and drivingly connected with the capstan drive roller through a belt. Problems have arisen in maintaining proper tension on this capstan drive belt because the axis of rotation of the capstan drive roller tilts and moves toward and away from the drive shaft of the capstan drive motor.

Yet another component which is critical to the satisfactory performance of a reduced height minicartridge tape drive for the three and one-half inch form factor is the reciprocable read/write head support mechanism. It must permit ready and accurate azimuth angle and zenith angle adjustment.

Thus, a need exists for an improved, reduced height minicartridge tape drive that will fit within the three and one-half inch form factor and solve the foregoing problems.

### SUMMARY OF THE INVENTION

There is provided in accordance with the present invention a tape drive as claimed in claim 1 herein.

### BRIEF DESCRIPTION OF THE DRAWINGS

Fig. 1 is an isometric view showing the underside of a preferred embodiment of our minicartridge tape drive with its main printed circuit board removed. A minicartridge is illustrated in sideways alignment for loading through the cartridge insertion slot in the front bezel of the tape drive.

Fig. 2 is an enlarged fragmentary plan view of the underside of the tape drive of Fig. 1 with all of its cartridge loading mechanism removed except for the scissors linkage thereof.

Figs. 3 and 4 are fragmentary plan views of the tape drive of Fig. 1. In Fig. 4, a minicartridge is shown fully inserted into the tape drive. Details of the head support mechanism and the capstan drive mechanism have been omitted in these figures.

Fig. 5 is an enlarged rear end elevation view taken from the right side of Fig. 2.

Fig. 6 is a reduced isometric view of the tape drive of Fig. 1 mounted in a surrounding adapter frame that fits the five and one-quarter inch form factor.

Fig. 7 is an enlarged side elevation view of the minicartridge ejection link, clamp arm and guide rail on the left side of the tape drive, viewed from the outside. This view shows the relationship of the components when a minicartridge is not loaded within the tape drive.

Fig. 8 is a view similar to Fig. 7 showing the relationshiop of the components when a minicartridge is fully loaded into the tape drive.

Fig. 9 is an enlarged side elevation view of the minicartridge ejection link, clamp arm and guide rail showing the reverse side thereof relative to Fig. 7.

Fig. 10 is an enlarged side elevation view of the minicartridge clamp arm and guide rail on the right side of the tape drive showing the relationship of the components when a minicartridge is not loaded within the tape drive.

Fig. 11 is a view similar to Fig. 10 showing the relationship of the components when a minicartridge is fully loaded into the tape drive.

Fig. 12 is a view of the clamp arm and guide rail on the right side of the tape drive showing the reverse side thereof relative to Fig. 10.

### DESCRIPTION OF THE PREFERRED EMBODIMENT

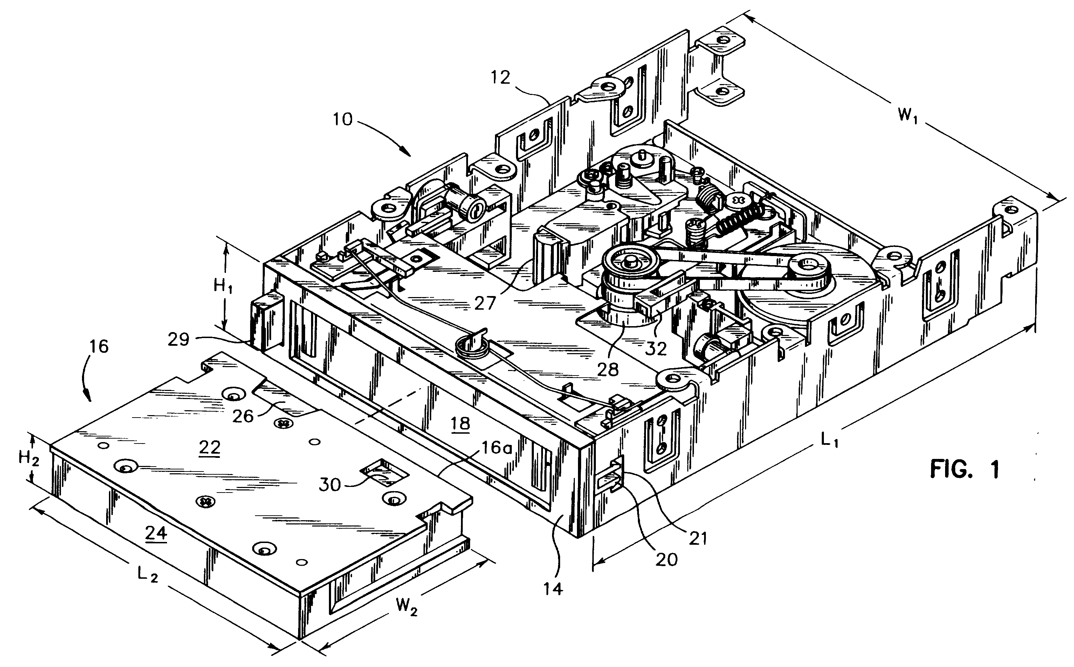

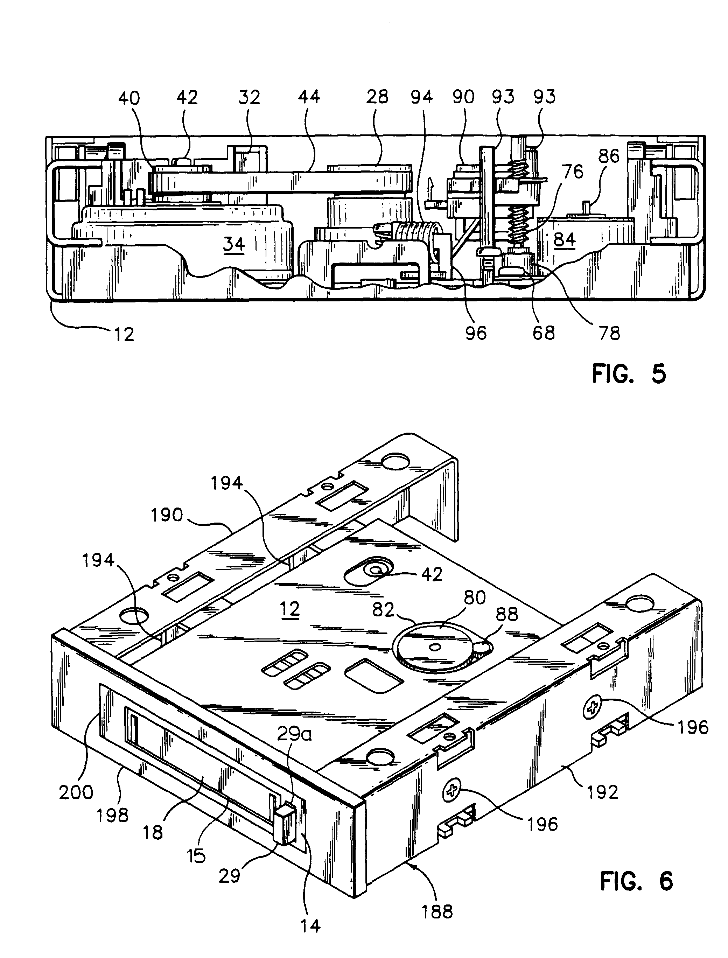

Fig. 1 illustrates a preferred embodiment of our reduced height minicartridge tape drive 10 that fits within a three and one-half inch form factor. In this figure a relatively large printed circuit board having the read/write control circuit interconnected thereon has been removed and the tape drive inverted to reveal the internal components thereof. The drive includes a rectangular frame 12 having a length L₁ and a width W₁ closely approximating that of the form factor and a height H₁ which is approximately one-inch. Preferably the frame 12 is made of a single sheet of zinc coated steel which is punched and bent to provide the U-shaped structure illustrated. This main frame provides the requisite rigidity with low weight and also provides EMI and RFI shielding. A bezel 14 extends across a forward transverse end of the frame 12. The bezel has a slot 15 (Fig. 6) dimensioned for permitting the industry standard minicartridge 16 (Fig. 1) to be inserted therethrough into a cartridge loading mechanism mounted inside the frame. The slot of the bezel 14 is normally closed by a hinged door 18. This door reduces the amount of dust that would otherwise contaminate the mechanisms within the tape drive. The bezel 14 is preferably injection molded plastic `and includes a pair of compressible tabs 20 at each end thereof. The tabs can be compressed and received in corresponding slots 21 formed in the side pieces of the frame 12 to thereby removably connect the bezel to the frame 12.

The minicartridge 16 (Fig. 1) has a length L₂ of approximately three and three-sixteenths inches, a width W₂ of approximately two and three-eighths inches and a height H₂ of approximately nine-sixteenths of an inch. The minicartridge has a metal base plate 22, a rectangular plastic cover 24 attached to the base plate, and a pair of reels (not visible) located between the base plate and the cover. A normally closed tape access door 26 is mounted utilizing a hinge assembly between the base plate and the cover along a side edge 27 of the cartridge. When the tape access door 26 of the minicartridge is opened, the minicartridge 16 can be engaged by a magnetic read/write head 27 mounted in the frame 12 on a reciprocal support mechanism hereafter described in greater detail. The access door 26 is pivotable about an axis perpendicular to the base plate to open a cutout region in the cover to thereby expose a length of magnetic tape (not visible) which is windable between the pair of reels. This tape winding is accomplished by engaging the lower enlarged diameter portion of a capstan drive roller 28 with a belt capstan roller (not visible) accessible to said roller 28 and rotatably mounted within the minicartridge 16 along the same side edge of the minicartridge 16 as the tape access door 26. The minicartridge 16 can be ejected by manually pressing an eject button 29 which extends through an aperture 29a (Fig. 6) in the bezel 14. The base plate 22 of the minicartridge 16 further has a viewing aperture 30 which is aligned with an optical BOT/EOT sensor 32 for detecting the beginning and end of the length of tape in the minicartridge 16.

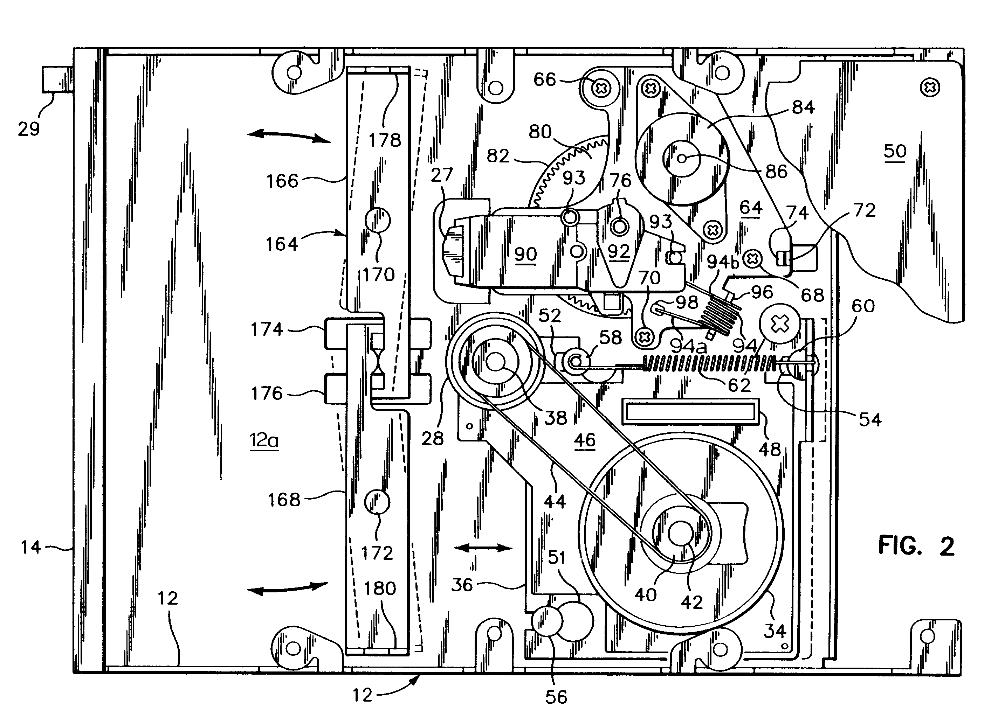

Referring to Fig. 2, the capstan drive roller 28 and a brushless DC drive motor 34 are both mounted on a substantially planar sub-frame 36. This sub-frame 36 is preferably made of a single piece of stamped sheet metal and is positioned in co-planar fashion relative to the horizontal planar base 12a of the main frame 12 of the drive. The capstan drive roller 28 is rotatably mounted on a shaft 38, one end of which is rigidly secured to the sub-frame 36. A pulley 40 is mounted to the drive shaft 42 of the motor 34. A drive belt 44 is entrained about the pulley 40 and about a portion of the capstan drive roller 28 to provide a driving connection therebetween.

A printed circuit board 46 (Fig. 2) is mounted co-planar with the plane of sub-frame 36 and has a motor drive circuit made up of electronic components (not illustrated) intercoupled thereon. A tachometer (not visible) senses the rotational speed of the capstan drive roller 28. It includes a plurality of angularly spaced light reflective indicia formed on the capstan drive roller 28. A female connector 48 is connected to the printed circuit board 46. This female connector receives a male connector (not illustrated) on the end of a ribbon cable (not illustrated) for connecting the motor drive circuit to another printed circuit board 50, only a portion of which is shown in Fig. 2. The printed circuit board 50 is attached to the underside of the frame 12 and, in the present embodiment, covers approximately three-quarters thereof. It has a substantial number of integrated circuit components (not illustrated) interconnected thereon which provide the read/write control circuit of the tape drive 10. Preferably this larger circuit board is a double-sided high density circuit board which makes extensive use of surface mounting of the integrated circuit components. The advance of semiconductor technology should allow a person skilled in the art to optimize the design as the art progresses.

The sub-frame 36 (Fig. 2) which carries the capstan drive roller 28 and drive motor 34 has three slots 51, 52 and 54 formed therein and spaced apart in a triangular relationship. The slot 50 opens along the forward edge of the sub-frame 36. Slots 52 and 54 open in a rearward direction. The slot 51 has a key shape including an enlarged circular rear portion which is connected to a smaller linear forward portion. This permits the sub-frame to be installed over the head of a rivet 56 whose shaft is secured to the base of the frame 12. The sub-frame may be slid rearwardly so that the shafts of rivets 58 and 60 are received in the slots 52 and 54. These rivets are also secured to the base of the frame 12. Their heads overlap the sub-frame 36. Thus, the sub-frame 36 (Fig. 2) is mounted to the base of the main frame 12 for motion along the longitudinal axis of the main frame. The sub-frame 36 slides forwardly and rearwardly as indicated by the arrows in Fig. 2.

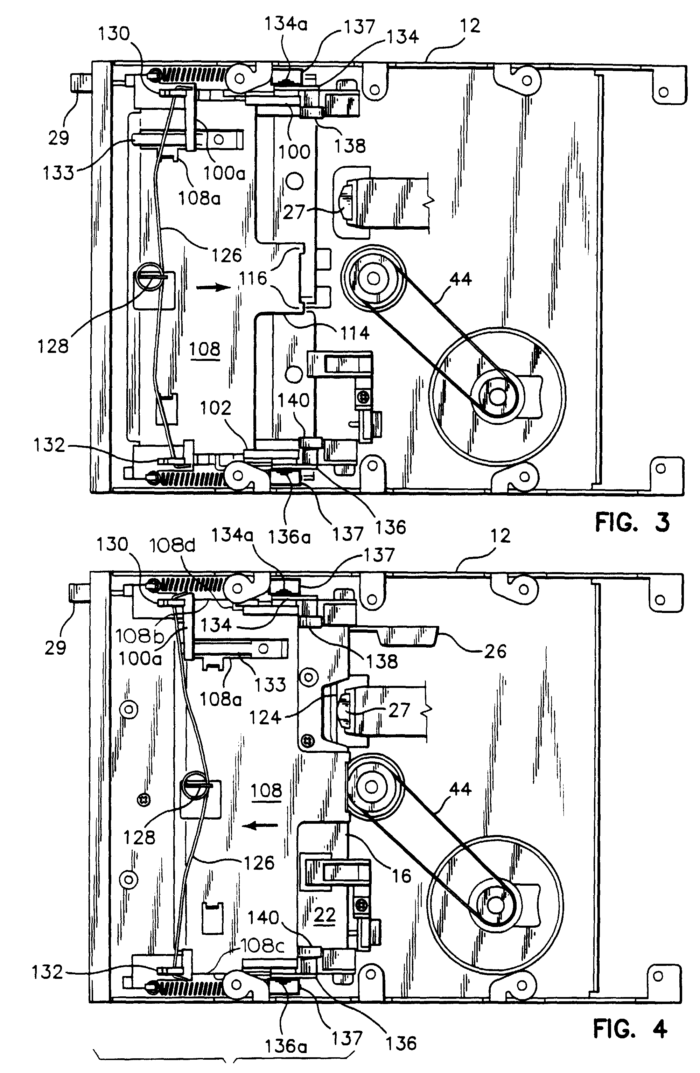

A spring 62 is connected between a rear edge of the sub-frame and the rivet 58 for biasing the sub-frame toward a minicartridge loading mechanism 63 in the forward portion of the frame 12. When the minicartridge 16 is inserted through the bezel 14 it will eventually reach a predetermined fully inserted location in the frame 12 where it is locked into a stationary position substantially fully contained within the frame 12 as best seen in Fig. 4. At this time, the capstan drive roller 28 will engage the belt capstan roller of the minicartridge in a yielding manner. In other words, the sub-frame 36 will move rearward, i.e. to the right in Fig. 2, a very slight amount. The tension on the spring 62 will urge the capstan drive roller 28 into engagement with the belt capstan roller of the minicartridge. It should be noted, however, that since the shaft 38 on which the capstan drive roller is mounted and the shaft 42 of the drive motor remain fixed in their respective axes of rotation, the tension on the drive belt 44 remains constant.

Details of the read/write head supporting mechanism are illustrated in Figs. 2 and 5. This mechanism includes a rigid, planar sub-base 64 also preferably made of a single piece of stamped sheet metal. This sub-base 64 is connected to the base of the main frame 12 by three triangularly spaced screw assemblies 66, 68 and 70. An upperwardly bent locator tab 72 stamped from a portion of the base of the frame 12 is received in a locater slot 74 formed in the sub-base 64.

A lead screw 76 extends perpendicular relative to the sub-base 64. The lead screw 76 is journaled in a bearing 78 (Fig. 5) mounted to the sub-base 64. One end of the lead screw 76 extends through a hole in the sub-base 64. A spur gear 80 is secured to this end of the lead screw 76 and rotates within a circular aperture 82 (Fig. 2) formed in the base of the main frame 12. A small stepper motor 84 is mounted to the underside of sub-base 64 visible in Fig. 2. One end of the shaft 86 of the stepper motor extends through another hole in the sub-base 64. A pinion gear 88 (Fig. 6) is rigidly secured to the upper end of the stepper motor shaft 86 and meshes with the spur gear 80.

The read/write head 27 (Fig. 2) is mounted to the forward end of a generally rectangular head support assembly 90. This head support assembly includes a wedge-shaped track nut 92 which is screwed over the threaded portion of the lead screw 76. Guide shafts 93 extend from the sub-base 64 and are slideably received in corresponding apertures in the head support assembly 90.
As best seen in Fig. 5, the main coil portion of a torsion spring 94 is supported by a projection 96 of the sub-base 64. Referring again to Fig. 2, one leg 94a of the torsion spring 94 is received in an aperture 98 formed in the sub-base 64. The other leg 94b of the torsion spring 94 extends between the head support assembly 90 and the sub-base 64. This leg of the torsion spring pushes against the track nut 92. This prevents tolerance variations between the internal threads of the track nut 92 and the external threads of the lead screw 76 from causing misalignment or inaccuracies in the positioning of the read/write head 27.

The stepper motor 84 is coupled to be energized via a controller circuit on the printed circuit board 50 to selectively rotate the pinion gear 88. The pinion gear 88 will turn the spur gear 80, thereby rotating the lead screw 76. This in turn causes the track nut 92 to thread upwardly and downwardly relative to the lead screw 76. Since the track nut 92 is coupled to, and forms a part of the head support assembly 90, this assembly reciprocates up and down relative to guide shafts 93. Thus, the stepper motor can be energized to move the read/write head 27, which is carried by the head support assembly 90. The movement takes place along a head reciprocation axis which is generally perpendicular to the base plate 22 of the minicartridge 16 when it is locked into its stationary position substantially fully contained within the frame 12. Such head reciprocation is used in selecting a data track on the tape.

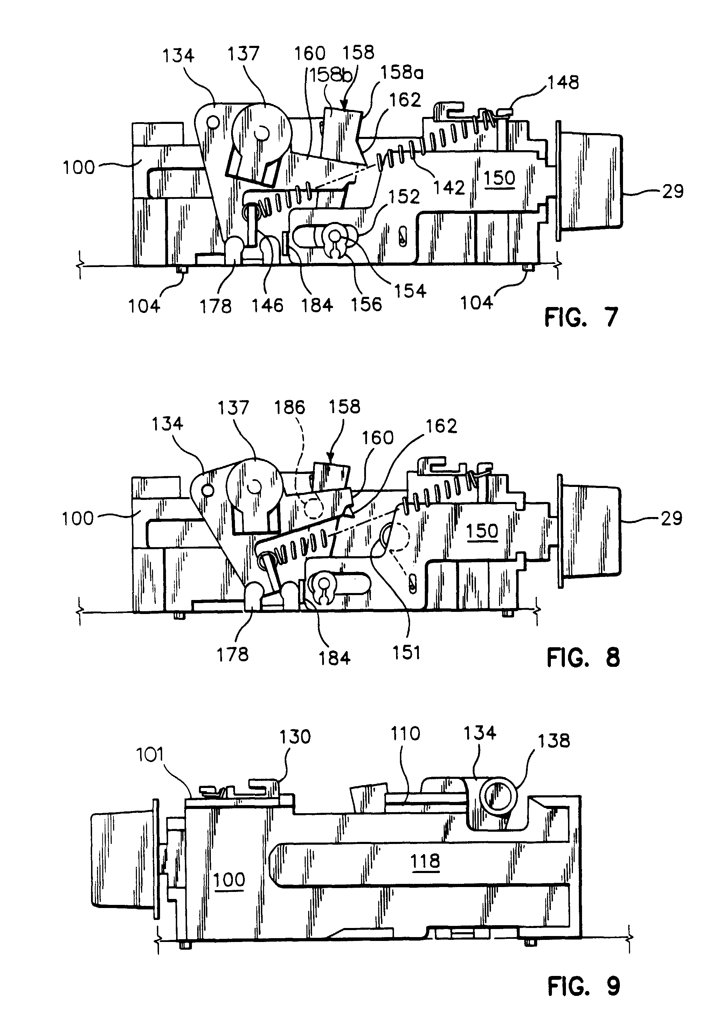

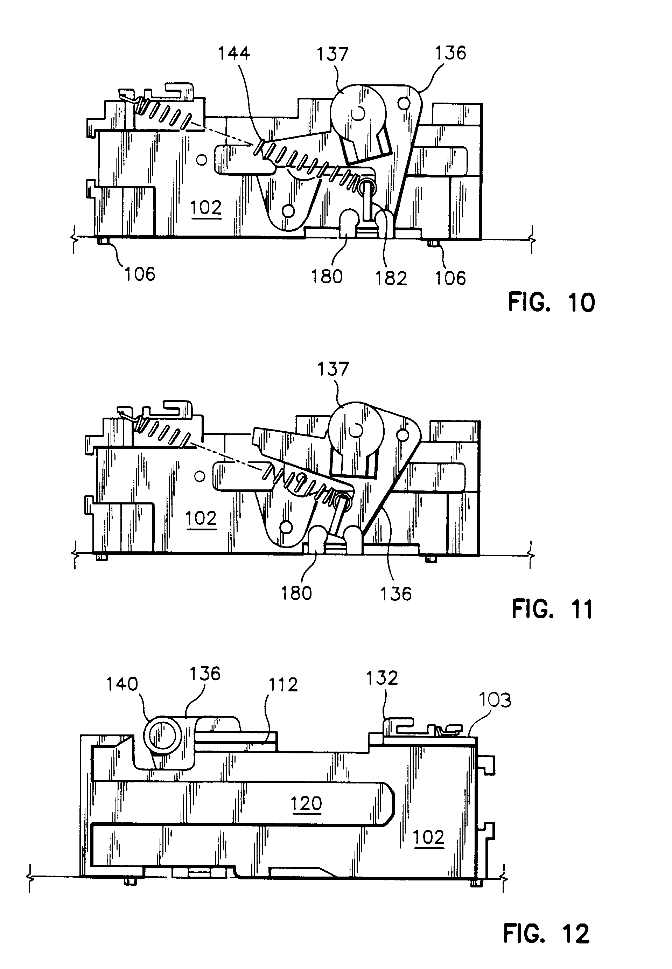

Details of the bi-stable minicartridge loading mechanism 63 are illustrated in Figs. 7-12. It includes a pair of left and right injection molded plastic guide rails 100 and 102 (Fig. 3, 9 and 12). These rails have a generally elongated rectangular configuration. They are in an upright orientation on opposite sides of the base of the frame 12. The left rail 100 has locator pins 104 (Fig. 7) that extend from the underside thereof. Similarly, the right rail 106 has locator pins 106 (Fig. 10) that extend from the underside thereof. These locator pins fit in aligned holes in the frame. The guide rails 100 and 102 are positioned in parallel alignment with each other and are spaced apart a distance slightly greater than the length L₂ of the minicartridge 16 so that the minicartridge can be inserted therebetween. Screws (not shown extend through the base of the frame 12 and thread into the rails 100 and 102 to secure the same in position.

A generally T-shaped cartridge insertion carriage 108 (Figs. 3 and 4) is longitudinally reciprocable (rearwardly and forwardly as indicated by the arrows) between the cartridge guide rails 100, 102 for facilitating the ejection of the minicartridge 16. This is illustrated by the arrows on top of carriage 108 in Figs. 3 and 4. The fully extended position of the carriage 108 is illustrated in Fig. 3. The fully retracted position of the carriage 108 is illustrated in Fig. 4.

The left end 108b of the carriage 108 is slideably received in a groove 110 (Fig. 9) formed in the left cartridge guide rail 100. The right end 108c of the carriage 108 is slideably received in a groove 112 (Fig. 12) formed in the right cartridge guide rail 102. A longitudinally extending leg portion 114 (Fig. 3) of the carriage 108 has a pair of arms 116 bent at a right angle to engage the side edge of the metal base plate 22 of the minicartridge upon insertion thereof through the slot 15 in the bezel 14.

The left and right cartridge guide rails 100 and 102 each have large, longitudinally extending projections 118 and 120, respectively, (Figs. 9 and 12) which support the end edges of the minicartridge 16. The minicartridge 16 has end edges 16a which are recessed relative to the metal base plate 22 and plastic top cover plate 24. The projections 118 and 120 on the cartridge guide rails 100, 102 fit between the base plate 22 and cover plate 24. When the minicartridge 16 is inserted in the sideways alignment shown in Fig. 1, the projection 118 on the left cartridge guide rail 100 pushes on the rear end of the spring biased tape access door 122 (Fig. 4) of the cartridge causing the same to open to permit the head 27 to engage the tape 124.

When the minicartridge 16 is inserted into the tape drive 10, the side edge thereof having the tape access door and belt capstan roller engages the projections 116 of the carriage 108. This pushes the carriage 108 rearwardly to the retracted position illustrated in Fig. 4. A torsion spring 126 has its intermediate portion looped around an upstanding element 128 of the carriage 108. The opposite ends of this torsion spring 126 are captivated in C-shaped retainers 130 and 132 (Figs. 9 and 12) formed on the forward portions of the upper edges 101 and 103 of the left and right cartridge guide rails 100 and 102.

When the cartridge insertion carriage 108 is moved rearwardly to its retracted position illustrated in Fig. 4, the torsion spring 126 is deflected from its normal, unstressed configuration shown in Fig. 3, to its stressed configuration illustrated in Fig. 4. When the minicartridge 16 is unclamped, as hereafter described, the stored force in the torsion spring 126 pulls the carriage 108 and the minicartridge 16 forwardly, ejecting the minicartridge 16 through the slot in the bezel 14.

Upon insertion of the minicartridge 16, the forward end of a metal leaf spring 133 (Fig. 4) is pushed downwardly through an aperture 108a in the carriage 108 into contact with the metal base plate 22 of the minicartridge 16. The forward end of this leaf spring 133 is normally bent upwardly and is pushed down through the aperture 108a by a stationary tab 100a that projects horizontally from the left cartridge guide rail 100. Any static charge that is built up on the carriage 108 is thus conveyed to the base plate 22 of the minicartridge 16.

The left and right cartridge guide rails 100 and 102 have clamp arms 134 and 136, respectively, rotatably attached thereto as best seen in Figs. 7 and 10. These arms 134, 136 can rotate relative to their associated guide rails from their unclamped positions illustrated in Figs. 7 and 10 to their clamped positions illustrated in Figs. 8 and 11. The rotation of these arms 134, 136 takes place about pins 134a and 136a (Fig. 4) which rotatably mount the arms to the cartridge guide rails 100 and 102, respectively. These pins 134, 136 are concealed in Figs. 7 and 10 by copper spring elements 137 carried on the outside of the clamp arms 134 and 136. These spring elements 137 are not illustrated in Fig. 4. They provide a positive electrical connection between the clamp arms 134 and 136 and the frame 12 of the tape drive.

The clamp arms 134 and 136 have clamp rollers 138 and 140 (Figs. 9 and 12). These rollers 138, 140 fit within corresponding cutouts in the base plate 22 of the minicartridge 16 when the arms 134, 136 are in their clamped positions as best seen in Fig. 4. These rollers 138, 140 preferably bear against the base plate 22 as described in the applicable ANSI specification to ensure proper registration of the minicartridge 16 relative to the read/write head 27. This also facilitates the discharge of static electricity from the base plate 22 of the minicartridge 16 to the grounded frame 12 of the drive. The clamp arms 134 and 136 are biased towards their clamped positions by springs 142 and 144 (Figs. 7 and 10). Each spring, such as 142, is connected between an orthogonal flange 146 (Fig. 7) on the corresponding clamp arm, such as 134, and a hook member 148 on the corresponding cartridge guide rail such as 100.

An elongate ejection link 150 (Fig. 7) is slideably attached in overlapping relationship with the left cartridge guide rail 100. The ejection link is biased rearwardly by a torsion spring 151 (Fig. 8). The rear portion of the ejection link 150 has an elongate slot 152 formed therein through which extends a pin 154. A retaining washer 156 is fit over one end of the pin 154. The other end of the pin 154 is connected to the lower end of a latch arm 158.

When the minicartridge 16 is inserted into the tape drive 10 it pushes the carriage 108 rearwardly. The left rear edge 108d (Fig. 4) of the carriage 108 pushes rearwardly against an upper frontal edge 158a (Fig. 7) of the latch arm 158. This pivots the upper portion 158b of the latch arm 158 rearwardly and allows a trigger arm portion 160 of the left clamp arm 134 to swing upwardly past a tooth portion 162 of the latch arm 158. The clamp arm 134 rotates to its clamped position illustrated in Fig. 8, placing the clamp roller 138 into registration with the base plate 22 of the minicartridge 16.

The rotational motion of the clamp arm 134 is translated through a scissors linkage 164 (Fig. 2) to the right clamp arm 136, causing it to also rotate to its clamped position illustrated in Fig. 11. This places the clamp roller 140 in registration with the base plate 22 of the minicartridge 16.

As shown in Fig. 2, the scissors linkage 164 consists of a pair of linkage arms 166 and 168 which pivot on top of the base of the frame 12 about attachment pins 170 and 172, respectively. The inner ends of the linkage arms 166 and 168 are folded around one another within slots 174 and 176 cut in the base of the frame 12. The linkage arms 166 and 168 are normally in their positions illustrated in Fig. 2 but move to their positions illustrated in phantom lines when the minicartridge 16 reaches a predetermined fully inserted location in the frame where it is locked into a stationary position by the clamping rollers 138 and 140.

The outer ends of the linkage arms 166 and 168 are formed with clevises 178 and 180, respectively (Figs. 7 and 10). The flange 146 on the clamp arm 134 fits within the clevis 178. The flange 182 (Fig. 10) on the clamp arm 136 fits within the clevis 180. Thus, the scissors linkage 164 ensures that the clamp arms 134 and 136 rotate simultaneously so that both ends of the minicartridge 16 are clamped and unclamped at the same time. The clamp arms 134, 136 rotate to their clamped positions and the clamp rollers 138, 140 engage the base plate 22 of the minicartridge 16 rapidly, providing a tactile feedback to the operator's hand.

The outer end of the ejection link 150 has the ejection button 29 mounted over the same which extends through a slot 15 in the bezel 14. When a minicartridge 16 is locked into its stationary position substantially contained within the frame as illustrated in Fig. 4, the ejection button 29 may be depressed to eject the minicartridge 16 from the tape drive 10. At this time the clamp arms 134, 136 are in their positions illustrated in Figs. 8 and 11. When the cartridge ejection button 29 is manually depressed, the ejection link 150 is pushed rearwardly, i.e. to the left in Figs. 7 and 8. An orthogonal tab 184 (Fig. 8) on the rearward end of the ejection link pushes rearwardly on the clevis 178. This rotates the clamp arm 134 clockwise in Fig. 8 to its unclamped position illustrated in Fig. 7. At the same time, this rotation of the clamp arm 134 is translated through the scissors linkage 164 to cause the clamp arm 136 to rotate counter-clockwise in Fig. 11 to its unclamped position illustrated in Fig. 10. This rotation of the clamp arms 134 and 136 lifts the clamp rollers 138 and 140 out of registration with the metal base plate 22 of the minicartridge 16. This permits the carriage 108 to eject the minicartridge 16 through the bezel 14 via the stored force in the torsion spring 126.

The upper end of the latch arm 158 (Fig. 8) is biased forwardly by a coil spring 186. Thus, when the trigger arm portion 160 of the clamp arm 134 moves downwardly past the tooth portion 162 of the latch arm 158, the latch arm 158 will snap forwardly to its position illustrated in Fig. 7. This retains both the clamp arms 134 and 136 in their unclamped positions illustrated in Figs. 7 and 10. The tape drive 10 is then ready to have another minicartridge loaded into the same.

It will thus be understood that the cartridge loading mechanism of our tape drive allows free sliding motion of the minicartridge 16 within the insertion slot of the bezel along a longitudinal axis of the frame 12. The loading mechanism ejects the minicartridge 16 unless the minicartridge has reached a predetermined fully inserted location in the frame where it is locked in a stationary position by the clamp arms 132, 134 and clamp rollers 138, 140. This stationary position is illustrated in Fig. 4. In this position, the minicartridge 16 is substantially contained within the frame 12 of the tape drive.

Upon ejection of the minicartridge 16, the tape access door 26 of the minicartridge swings shut. This occurs when the ends of the minicartridge clear the projections 118 and 120. In this manner, the tape access door 26 does not shut, under the force of its closure spring, until the minicartridge 16 is clear of the read/write head 27.

It is desirable that our minicartridge tape drive 10 also be capable of fitting within the industry standard five and one-quarter inch form factor receptacles in older personal computers. In order to accomplish this, our minicartridge tape drive may be mounted in a surrounding adapter frame 188 (Fig. 6). This adapter frame includes a pair of side pieces 190 and 192. Brackets 194 are attached to the side pieces 190 and 192 via screws 196 and are also attached to the side pieces of the frame 12 of our minicartridge tape drive. A front panel 198 connects the side pieces 190 and 192 of the adapter frame. The front panel has a rectangular opening 200 which exposes the ejection button 29, front bezel 14 and door 18 of the minicartridge tape drive. The adapter frame 188 has a width of approximately five and three-quarters inches, a length less than eight inches and a height of approximately one and five-eighths inches. Thus, it fits within roughly half of the five and one-quarter inch form factor. With the adapter frame 188, the minicartridge tape drive may be installed into a five and one-quarter inch form factor receptacle in an older personal computer along with a half-height five and one-quarter inch form factor Winchester disk drive or floppy disk drive.

While we have described a preferred embodiment of our reduced height three and one-half inch form factor tape drive, it should be apparent that modifications and adaptations thereof will occur to persons skilled in the art. Therefore, the protection afforded our invention should only be limited in accordance with the scope of the following claims.

## Claims

1. A tape drive (10) for an industry standard minicartridge (16), comprising:
a frame (12) having a removable front bezel (14) with a minicartridge insertion slot (15);
bi-stable minicartridge loading means mounted in the frame (12) for slideably receiving and supporting a minicartridge (16) in a sideways orientation within the frame (12) with a longer side edge of the minicartridge (16) parallel to a transverse axis of the frame (12), the loading means ejecting the minicartridge (16) through the insertion slot (15) along a longitudinal axis of the frame (12) unless the minicartridge (16) reaches a predetermined fully inserted location in the frame (12), where it is locked into a stationary position substantially fully contained within the frame (12), the loading means further including means for opening an access door (26) of the minicartridge (16);
a read/write head (27); and
means mounted in the frame (12) for supporting the read/write head for engagement with a length of tape exposed by opening the access door of the minicartridge (16) including means for reciprocating the head across a width of the tape for track selection, characterised by:
the head supporting means including a single rigid sub-base (64) connected to the frame (12) by a plurality of screw assemblies (66,68,70) which may be independently rotated to tilt the sub-base (64) and thereby independently adjust an azimuth angle and a zenith angle of the head (27) relative to the tape (124); and
means for moving the tape (124) in the minicartridge (16) including a sub-frame (36), a capstan drive roller (28), means (38) for rotatably mounting the capstan drive roller (28) on the sub-frame (36), a motor (34) mounted on the sub-frame (36) having a shaft (42) with a pulley (40), a drive belt (44) entrained about the pulley (40) and the capstan drive roller (28), means (56,60) for mounting the sub-frame (36) for motion along the longitudinal axis of the frame (12), and a spring (62) connected between the sub-frame (36) and the frame (12) for biasing the sub-frame (36) toward the minicartridge loading means for urging the capstan drive roller (28) into engagement with a belt capstan roller of the minicartridge (16).

2. A tape drive (10) for a minicartridge (16) as claimed in claim 1, wherein:
said sub-frame (36) is translationally mounted on and substantially parallel to said base (12a), and capable of reciprocation in a direction parallel to the direction of loading of the minicartridge (16);
the capstan within the minicartridge (16) biases said roller (28) in a direction parallel to the direction of loading of the minicartridge (16), rotation of said roller (28) causing rotation of the capstan to thereby move the length of tape (124) past said read/write head (27); and
the sub-frame (36) allows said roller (28) to move when engaged by the capstan without changing a distance between said roller (28) and said drive motor (34).

3. A tape drive (10) for a minicartridge (16) as claimed in claim 1 or 2, wherein said loading means comprises:
a carriage (108), translationally mounted on and substantially parallel to said base (12a), for supporting the minicartridge (16) within the tape drive (10), the carriage (108) being capable of reciprocation parallel to the direction of loading of the minicartridge (16);
spring means (126) for biasing said carriage (108) in a direction opposite the direction of loading of the minicartridge (16); and
clamping means (134, 136) for clamping the minicartridge (16) within said frame (12) when the minicartridge (16) is properly positioned within the tape drive (10) for data transfer.

4. A tape drive (10) for a minicartridge (16) as claimed in claim 3, further comprising means (150) for ejecting the minicartridge (16), said ejection means (150) being capable of disengaging said clamping means (134, 136) so that said spring means (126) moves said carriage (108) toward said slot (15) to thereby eject the minicartridge (16) from the tape drive (10).

5. A tape drive (10) for a minicartridge (16) as claimed in claims 3 or 4, further comprising means (133, 138, 140) mounted on said carriage (108) for discharging static electricity from said carriage (108).

## Patentansprüche

1. Bandlaufwerk (10) für eine Minikassette (16) nach Industrienorm, wobei das Laufwerk folgendes umfaßt:
einen Rahmen (12) mit einer entfernbaren vorderen Einfassung (14), die einen Minikassetten-Einführungsschlitz (15) aufweist;
eine bistabile Minikassetten-Ladeeinrichtung, die in dem Rahmen (12) angebracht ist, um eine Minikassette in einer Seitwärtsausrichtung in dem Rahmen (12) gleitend aufzunehmen und zu stützen, wobei eine längere Seitenkante der Minikassette (16) parallel zu einer Querachse des Rahmens ausgerichtet ist, wobei die Ladeeinrichtung die Minikassette (16) durch den Einführungsschlitz (15) entlang einer Longitudinalachse des Rahmens (12) auswirft bzw. ausgibt, sofern die Minikassette (16) nicht eine vollständig eingeführte Position in dem Rahmen (12) erreicht, an der sie an einer ortsfesten Position verriegelt wird, die sich im wesentlichen vollständig innerhalb des Rahmens (12) befindet, wobei die Ladeeinrichtung ferner eine Einrichtung zum Öffnen einer Zugangstür (26) der Minikassette (16) aufweist;
einen Schreib-Lesekopf (27); und
eine in dem Rahmen (12) angebrachte Einrichtung, die dazu dient, den Eingriff des Schreib-Lesekopfes mit einer Bandlänge zu unterstützen, die durch Öffnen der Zugangstür der Minikassette (16) freigelegt wird, mit einer Einrichtung zur Hin- und Herbewegung des Kopfes über eine Breite des Bandes zur Spurauswahl, gekennzeichnet durch:
eine Kopfträgereinrichtung mit einer einzelnen steifen Montageschiene (64), die durch eine Mehrzahl von Schraubeneinrichtungen (66, 68, 70) mit dem Rahmen (12) verbunden ist, wobei die Schraubeneinrichtungen unabhängig voneinander gedreht werden können, um die Montageschiene (64) zu neigen, und um dadurch einen Seitenwinkel und einen Zenitwinkel des Kopfes (27) relativ zu dem Band (124) unabhängig voneinander anzupassen; und
eine Einrichtung zum Transport des Bands (124) in der Minikassette (16), mit einem Hilfsrahmen (36), einer Bandantriebsrolle (28), einer Einrichtung (38) zur drehbaren Befestigung der Bandantriebsrolle (28) an dem Hilfsrahmen (36), einem an dem Hilfsrahmen (36) angebrachten Motor (34) mit einer Welle (42) mit einer Riemenscheibe (40), einem Antriebsriemen (44), der um die Riemenscheibe (40) und die Bandantriebsrolle (28) mitgeführt wird, mit einer Einrichtung (56, 60) zur Befestigung des Hilfsrahmens (36) für einen Transport entlang der Longitudinalachse des Rahmens (12), und wobei eine Feder (62) zwischen den Hilfsrahmen (36) und den Rahmen (12) geschaltet ist, um den Hilfsrahmen (36) in Richtung der Minikassetten-Ladeeinrichtung vorzubelasten, um die Bandantriebsrolle (28) in Eingriff mit einer Riemenantriebsrolle der Minikassette (16) zu drücken.

2. Bandlaufwerk (10) für eine Minikassette (16) nach Anspruch 1, wobei:
der genannte Hilfsrahmen (36) eine Translationsanbringung im wesentlichen parallel zu der genannten Basis (12a) aufweist und in eine Richtung hin- und herbewegt werden kann, die parallel zu der Laderichtung der Minikassette (16) ausgerichtet ist;
wobei die Bandantriebsrolle in der Minikassette (16) die genannte Rolle (28) in eine Richtung vorbelastet, die parallel zu der Laderichtung der Minikassette (16) verläuft, wobei die Rotation der genannten Rolle (28) eine Rotation der genannten Bandantriebsrolle bewirkt, um dadurch die Bandlänge (124) an dem genannten Schreib-Lesekopf (27) vorbei zu transportieren; und
wobei der Hilfsrahmen (36) es ermöglicht, daß sich die genannte Rolle (28) bewegt, wenn ein Eingriff mit der genannten Bandantriebsrolle erfolgt, ohne dabei den Abstand zwischen der genannten Rolle (28) und dem genannten Antriebsmotor (34) zu verändern.

3. Bandlaufwerk (10) für eine Minikassette (16) nach Anspruch 1 oder 2, wobei die genannte Ladeeinrichtung folgendes umfaßt:
einen Wagen (108), der eine Translationsanbringung an der genannten Basis (12a) und im wesentlichen parallel zu dieser aufweist, um die Minikassette (16) in dem Bandlaufwerk (10) zu unterstützen, wobei der Wagen (108) parallel zu der Laderichtung der Minikassette (16) hin- und herbewegt werden kann;
eine Federeinrichtung (126) zur Vorbelastung des genannten Wagens (108) in eine entgegengesetzte Richtung zu der Laderichtung der Minikassette (16); und
eine Klemmeinrichtung (134, 136) zum Klemmen der Minikassette (16) in dem genannten Rahmen (12), wenn die Minikassette (16) für die Datenübertragung zweckmäßig in dem Bandlaufwerk (10) positioniert ist.

4. Bandlaufwerk (10) für eine Minikassette (16) nach Anspruch 3, wobei das Laufwerk ferner eine Einrichtung (150) für die Ausgabe der Minikassette (16) umfaßt, wobei die genannte Ausgabeeinrichtung (150) von der genannten Klemmeinrichtung (134, 136) ausrücken kann, so daß die genannte Federeinrichtung (126) den genannten Wagen (108) in Richtung des genannten Schlitzes (15) bewegt, um dadurch die Minikassette (16) aus dem Bandlaufwerk (10) auszugeben.

5. Bandlaufwerk (10) für eine Minikassette (16) nach Anspruch 3 oder 4, wobei das Laufwerk ferner eine Einrichtung (133, 138, 140) umfaßt, die an dem genannten Wagen (108) angebracht ist, um statische Elektrizität von dem genannten Wagen (108) zu entladen.

## Revendications

1. Lecteur à bande (10) pour une mini-cartouche (16) standard dans l'industrie, comprenant:
un châssis (12) ayant une lunette d'encadrement (14) frontale amovible avec une fente (15) pour l'insertion de la mini-cartouche,
un moyen de chargement bistable pour la mini-cartouche dans le châssis (12) pour recevoir de manière coulissante et supporter une mini-cartouche (16) dans une orientation latérale à l'intérieur du châssis (12) avec un bord latéral plus long de la mini-cartouche (16) parallèle à un axe transversal du châssis (12), le moyen de chargement éjectant la mini-cartouche (16) par la fente d'insertion (15) le long d'un axe longitudinal du châssis (12) à moins que la mini-cartouche (16) n'atteigne un emplacement prédéterminé totalement inséré dans le châssis (12) où elle est verrouillée dans une position stationnaire complètement contenue pour l'essentiel à l'intérieur du châssis (12), le moyen de chargement comprenant en outre un moyen pour ouvrir une porte d'accès (26) de la mini-cartouche (16),
une tête de lecture / d'écriture (27), et
un moyen monté dans le châssis (12) pour soutenir la tête de lecture / d'écriture afin qu'elle soit en prise avec une longueur de bande exposée en ouvrant la porte d'accès de la mini-cartouche (16) comprenant un moyen pour faire aller et venir la tête sur toute la largeur de la bande pour la sélection de la piste, caractérisé en ce que:
le moyen soutenant la tête comprend une unique embase associable (64) rigide connectée au châssis (12) par une pluralité de boulons avec rondelle incorporée (66, 68, 70) qui peuvent être amenés à pivoter indépendamment pour incliner l'embase associable (64) et de ce fait ajuster indépendamment un angle azimutal et un angle zénithal de la tête (27) par rapport à la bande (124), et
des moyens pour mouvoir la bande (124) dans la mini-cartouche (16) comprenant un châssis secondaire (36), un rouleau entraîneur à cabestan (28), des moyens pour monter de manière rotative le galet entraîneur à cabestan (28) sur le châssis secondaire (36), un moteur (34) monté sur le châssis secondaire (36) ayant un arbre (42) avec une poulie (40), une courroie d'entraînement (44) entraînée par la poulie (40) et des moyens (56, 60) pour monter le châssis secondaire (36) pour qu'il puisse se déplacer le long d'un axe longitudinal du châssis (12), et un ressort (62) connecté entre le châssis secondaire (36) et le châssis (12) pour incliner le châssis secondaire (36) vers le moyen de chargement de la mini-cartouche pour mettre le galet entraîneur à cabestan (28) en prise avec un rouleau à cabestan à courroie de la mini-cartouche (16).

2. Lecteur à bande (10) pour une mini-cartouche (16) selon la revendication 1, dans lequel:
ledit châssis secondaire (36) est monté de manière translationnelle sur ledit socle (12a) et essentiellement en parallèle à celui-ci (12a) et capable d'aller et venir dans une direction parallèle à la direction de chargement de la mini-cartouche (16),
le cabestan dans la mini-cartouche (16) incline ledit galet (28) dans une direction parallèle à la direction de chargement de la mini-cartouche (16), la rotation dudit galet (28) provoquant la rotation du cabestan pour mouvoir ce faisant la longueur de la bande (124) devant ladite tête de lecture / d'écriture (27), et
le châssis secondaire (36) permet audit galet (28) de se mouvoir quand il est en prise avec le cabestan sans changer de distance entre ledit galet (28) et ledit moteur d'entraînement (34).

3. Lecteur à bande (10) pour une mini-cartouche (16) selon la revendication 1 ou 2, dans lequel ledit moyen de chargement comprend:
un chariot (108), monté de manière translationnelle sur ledit socle (12a) pour supporter la mini-cartouche (16) dans le lecteur à bande (10), le chariot (108) étant capable d'aller et venir parallèlement à la direction de chargement de la mini-cartouche (16),
un moyen de ressort (126) pour incliner ledit chariot (108) dans une direction opposée à la direction de chargement de la mini-cartouche (16), et
des moyens de blocage (134, 136) pour bloquer la mini-cartouche (16) dans ledit châssis (12) quand la mini-cartouche (16) est positionnée de manière appropriée dans le lecteur à bande (10) pour le transfert de données.

4. Lecteur à bande (10) pour une mini-cartouche (16) selon la revendication 3, comprenant en outre un moyen (150) pour éjecter la mini-cartouche (16), ledit moyen d'éjection (150) étant capable de libérer lesdits moyens de blocage (134, 136) afin que ledit moyen de ressort (126) déplace ledit chariot (108) vers ladite fente (15) pour éjecter ce faisant la mini-cartouche (16) du lecteur à bande (10).

5. Lecteur à bande (10) pour une mini-cartouche (16) selon la revendication 3 ou 4, comprenant en outre des moyens (133, 138, 140) montés sur ledit chariot (108) pour décharger l'électricité statique dudit chariot (108).
